# EUROPÄISCHE PATENTSCHRIFT

(11) **EP 2 401 323 B1**
(45) Veröffentlichungstag und Bekanntmachung des Hinweises auf die Patenterteilung: **28.03.2018**
(21) Anmeldenummer: 10705572.5
(22) Anmeldetag: 04.02.2010
(51) Int. Cl.: C08J 7/12

(54) **VERFAHREN ZUR AUSHÄRTUNG UND OBERFLÄCHENFUNKTIONALISIERUNG VON FORMTEILEN**
PROCESS FOR CURING AND SURFACE MODIFICATION OF MOLDED ARTICLES
PROCÉDÉ POUR LA RÉTICULATION ET LA MODIFICATION DE SURFACE D'ARTICLES MOULÉS

(30) Priorität: 25.02.2009 DE 102009001145
(43) Veröffentlichungstag der Anmeldung: 04.01.2012
(73) Patentinhaber: Leibniz-Institut für Polymerforschung Dresden e.V., 01069 Dresden (DE)
(72) Erfinder: GEDAN-SMOLKA, Michaela, 01990 Großkmehlen (DE); GOHS, Uwe, 01129 Dresden (DE); MÜLLER, Anett, 09117 Chemnitz (DE)
(74) Vertreter: Rauschenbach, Marion
(86) Internationale Anmeldenummer: PCT/EP2010/051351
(87) Internationale Veröffentlichungsnummer: WO 2010/097276

(56) Entgegenhaltungen:
- US-A- 4 525 257
- US-A- 4 598 128
- US-A- 5 206 092
- US-A- 6 114 486
- US-A1- 2007 085 242

## Beschreibung

Die Erfindung bezieht sich auf die Gebiete der Chemie und der Verfahrenstechnik und betrifft ein Verfahren zur Aushärtung und Oberflächenmodifizierung von Formteilen aus polymerisierbaren Harzen mit gegebenenfalls polymerisierbaren Monomeren, Füll- und Verstärkungsstoffen (Fasern), Pigmenten sowie Additiven, beispielsweise von "sheet molding compound" (SMC) oder "bulk molding compound" (BMC), die dann als Formteile beispielsweise in der Autoindustrie, im Fahrzeugbau, in der Elektroindustrie zum Einsatz kommen können.

Die zunehmende gewerbliche Anwendung von Duromer-Formteilen, beispielsweise von Faser-Polymermatrix Formteilen, wie beispielsweise SMC- und BMC-Bauteilen, in den verschiedensten technischen Bereichen, wie Fahrzeugindustrie, Schienenfahrzeugbau, Elektroindustrie und Gerätebau, erfordert Herstellungsverfahren, mit dem die Bauteile in guter Qualität und in möglichst kurzer Zeit hergestellt werden können. In den meisten Fällen ist im Anschluss eine Beschichtung der Bauteile notwendig, was weitere Anforderungen an die Materialien und Herstellungsverfahren stellt.

Zur Herstellung von Bauteilen aus SMC und BMC-Materialien werden beispielsweise vernetzbare Harze, Oligomere, Reaktivverdünner, Fasern und Additive eingesetzt, die innerhalb kontinuierlicher Prozesse vernetzen müssen. Dies kann beispielsweise bei SMC-Bauteilen während der Formgebung des Bauteiles mittels Pressen unter höheren Temperaturen erfolgen. Dabei hängt die Oberflächenqualität, die für eine nachträgliche Beschichtung mittels einer Lackierung von Bedeutung ist, vom Materialsystem, dem Herstellungsverfahren, den Herstellungsparametern und der Rauheit und Welligkeit der Werkzeugoberfläche ab. Da die für eine nachfolgende Lackierung erforderliche Oberflächenqualität oft nicht in ausreichender Qualität im Herstellungsprozess gesichert werden kann und weiterhin auch Reste der internen und/oder externen Presshilfsmittel, wie beispielsweise Trennmittel, noch vorhanden sind, werden weitere Prozessschritte, wie beispielsweise Entgraten, Padden, Powerwash oder Beflämmen, angeschlossen, um die für die Lackierung notwendige benetzbare Oberfläche zu erhalten, die dann auch eine gute Haftung der Beschichtung ermöglicht.

Derzeit zeigen alle industriellen Formgebungs- und Beschichtungsprozesse für SMC-Bauteile mit Flüssig-, Wasser- oder Pulverlacken mit anschließendem Einbrennprozess bis zur Vernetzung der Polymere (Lackschicht) deutliche Probleme, die zu schwankenden Qualitäten und einer nicht ausreichenden Prozessstabilität führen. Diese werden unter anderem verursacht durch Restmonomere, Oligomere oder Reaktivverdünner, die durch die Temperaturbeanspruchung an die Oberfläche migrieren und auch an die Atmosphäre abgegeben werden (Fogging). Auch im nachgeschalteten Lackierprozess können diese aus dem SMC-Material austreten und damit Lackschichtfehler (z. B. Poren, Krater, Kracks, Delaminationen) verursachen (R. Liebold, Farbe+Lack, 108, 7 (2002) S.4).

Um die SMC-Formteile gegen die Auswirkungen der Ausgasungen im Lackierprozess möglichst gut zu schützen, werden insbesondere für sogenannte Class A-Bauteile vor dem Lackierprozess in einem zusätzlichen Prozessschritt Versiegelungsmittel, wie Primer oder Sealer (K. Joesel, Radtech Report November/December 2001, 23 ff.), aufgetragen, und diese dann weitgehend ohne oder mit moderater thermischer Beanspruchung getrocknet. Eine andere Variante stellt die Aufbringung der Versiegelungsschicht über In-mold-coating (IMC) direkt im thermischen Pressprozess dar. Nachteil dieser Verfahrensvariante ist eine Limitierung auf geometrisch einfach strukturierte Bauteile (H. G. Kia: Sheet Molding Compounds-Science and Technology, Hanser Verlag München 1993, S. 163 ff.). Diese zusätzlichen Prozessschritte sind aufwändig, teuer und verlängern den Herstellungsprozess.

Weiterhin sind Verfahren zur Polymermodifizierung mit energiereichen Elektronen bekannt, wie beispielsweise die Vernetzung von Polymeren (z. B. Thermoplaste, Elastomere), die Härtung von Reaktivharzsystemen zur Herstellung von Faser-Polymermatrix-Formteilen und die Funktionalisierung von PTFE. Diese Anwendungen beruhen auf einem räumlich und zeitlich präzisen Energieeintrag mittels energiereicher Elektronen zur Erzeugung angeregter Atome oder Moleküle sowie Ionen, die bevorzugt Radikale bilden und komplexe chemische Reaktionen induzieren. Im Ergebnis entsteht ein Polymer mit veränderten chemischen, elektrischen, mechanischen und thermischen Eigenschaften (A. Charlesby, Proc. Roy. Soc. A, 1952, vol. 215, pp. 187-214).

Die Härtung reaktiver Harzsysteme mittels energiereicher Elektronen zur Herstellung von Faser-Polymermatrix-Kompositen wurde bisher vorwiegend für Einsatzzwecke im Militärwesen oder in der Luft- und Raumfahrt eingesetzt. Vorteile der Härtung mit energiereichen Elektronen sind die Möglichkeit der Fertigung großer Bauteile ohne den Einsatz eines Autoklaven, eine erhöhte Energieeffizienz von bis zu 70 % (gegenüber dem thermischen Pressprozess), ausgedehnte Handlingzeiten, geringe Schrumpfung, geringe Gasemission, geringe Restspannungen, geringe Wasserabsorption, höhere Glasübergangstemperaturen, kürzere Härtungszeiten und die Möglichkeit der kompletten Einbindung der verwendeten Materialien in das Netzwerk (Abaris, EB Curing Technology, Las Vegas, 1994; Norris, R., EB Curing of Composites Workshop, 1996).

In Kombination mit dem Härten mittels energiereicher Elektronen werden die Fertigungsverfahren Wickeln, Pultration, Prepreg mit Vakuumsack oder vacuum assisted resin transfer molding (VARTM) oder resin transfer molding (RTM) eingesetzt. Große Elektronenbeschleuniger und hohe Investitionskosten beschränkten den Einsatz der Härtung reaktiver Harzsysteme mittels energiereicher Elektronen auf die o. g. Hightech-Bereiche. Auf dem Weltmarkt verfügbare kompakte und leistungsfähige Elektronenbeschleuniger ermöglichen inzwischen einen kompakten Anlagenaufbau inklusive Abschirmung und die Integration in die Fertigungslinie in den verschiedensten technischen Bereichen, wie zum Beispiel Fahrzeugindustrie, Schienenfahrzeugbau, Elektroindustrie und Gerätebau.

Mit den bekannten Verfahren sind jedoch die Probleme schwankender Qualität und nicht ausreichender Prozessstabilität des Herstellungsprozesses nicht vollständig oder nur unter Einsatz aufwändiger und teurer zusätzlicher Prozessschritte zu beheben, da diese mit dem zur Zeit genutzten Herstellungsverfahren verbunden sind.

Die Aufgabe der vorliegenden Erfindung besteht in der Angabe eines Verfahrens zur Aushärtung und Oberflächenfunktionalisierung von Formteilen, welches insbesondere in kurzer Zeit und mit hoher Reproduzierbarkeit durchgeführt werden kann und zu einer Verbesserung der Oberflächenqualität der zu lackierenden Formteile führt.

Die Aufgabe wird durch die in den Ansprüchen angegebene Erfindung gelöst. Vorteilhafte Ausgestaltungen sind Gegenstand der Unteransprüche.

Bei dem erfindungsgemäßen Verfahren zur Aushärtung und Oberflächenfunktionalisierung von Formteilen werden Materialien, die mindestens ein ungesättigtes radikalisch oder kationisch härtendes Reaktivharzsystem und weitere Stoffe enthalten, zu einem Formteil verarbeitet und während oder nach dem Formgebungsprozess mit oder ohne Beschichtung bis zur Formstabilität vernetzt und während der Vernetzung und/oder nachfolgend, vor und/oder nach einer Beschichtung wird das Formteil einer Bearbeitung mittels energiereicher Strahlung oder energiereicher Teilchen bis zur im Wesentlichen vollständigen Aushärtung mindestens des Oberflächenbereiches des Formteiles, wobei die Aushärtung erfolgt, bis über DSC-Messungen keine Restreaktivität im Formteil mehr detektierbar ist, und bis zur Herstellung einer im Wesentlichen vollständig beschichtbaren Formteiloberfläche ausgesetzt, wobei die Bearbeitung mittels energiereicher Strahlung oder energiereichen Teilchen in mindestens zwei Schritten mit gleicher oder unterschiedlicher Dosis pro Behandlungsschritt durchgeführt wird.

Vorteilhafterweise werden Formteile hergestellt und einer Bearbeitung mit energiereicher Strahlung oder energiereichen Teilchen ausgesetzt, die aus einem Faser-Polymermatrix-Material bestehen, wobei noch vorteilhafterweise die Faser-Polymermatrix-Materialien aus ungesättigten Polyesterharzen oder Acrylharzen (Acrylaten, Methacrylaten) oder Epoxyharzen mit einem kationischen Initiator bestehen.

Weiterhin vorteilhafterweise wird ein ungesättigtes Reaktivharzsystem eingesetzt, welches weitere Stoffe enthält, wobei noch vorteilhafterweise als weitere Stoffe Additive und/oder Füllstoffe und/oder Verstärkungselemente und/oder weitere Polymere und/oder Reaktivverdünner eingesetzt werden.

Ebenfalls vorteilhafterweise werden Formteile eingesetzt, die sheet molding compound" (SMC) oder "bulk molding compound" (BMC) sind.

Und auch vorteilhafterweise werden die Formteile mittels Heißpressens geformt.

Von Vorteil ist es auch, wenn die Vernetzung thermisch initiiert wird, wobei noch vorteilhafterweise die Vernetzung bis zur Formteilstabilität ausgeführt wird.

Weiterhin von Vorteil ist es, wenn die Bearbeitung mittels energiereicher Strahlung oder energiereicher Teilchen in einer reaktiven Gasumgebung und/oder an Luft durchgeführt wird.

Ebenfalls von Vorteil ist es, wenn die Bearbeitung mittels energiereicher Elektronen oder Gamma- oder Infrarot- oder Mikrowellenstrahlung oder Induktionseintrag in Kombination mit einer Plasmabehandlung durchgeführt wird.

Und auch von Vorteil ist es, wenn die Bearbeitung ausschließlich mit energiereichen Elektronen in einer reaktiven Gasumgebung und/oder an Luft durchgeführt wird.

Vorteilhaft ist es auch, wenn die Bearbeitung mit Dosen im Bereich von 10 kGy bis 250 kGy durchgeführt wird.

Und auch vorteilhaft ist es, wenn die Bearbeitung bei Temperaturen von 5 °C bis zu Temperaturen bei denen die thermische Formteilstabilität der Materialien gewährleistet ist, durchgeführt wird.

Und ebenfalls von Vorteil ist es, wenn die Bearbeitung an beschichteten Faser-Polymermatrix-Formteilen durchgeführt wird, wobei noch vorteilhafterweise als Beschichtung eine Lackierung durchgeführt wird.

Mit dem erfindungsgemäßen Verfahren ist es erstmals möglich, in relativ kurzer Zeit und mit geringem Aufwand ein Formteil zu erhalten, welches weitgehend ausgehärtet ist, um ein Austreten niedermolekularer Bestandteile, wie Restmonomere, Oligomere oder Reaktivverdünner bei nachfolgender Temperaturbeanspruchung während des Lackierprozesses aus dem SMC- und BMC-Material zu verhindern, und dessen Oberflächeneigenschaften für die Weiterverarbeitung ausreichend bis gut oder sehr gut sind. Als ausgehärtet wird dabei verstanden, dass über DSC-Messungen keine Restreaktivität mehr im Bauteil detektiert wird. Insbesondere betrifft dies beschichtete Formteile, die vor oder während oder nach der Beschichtung erfindungsgemäß ausgehärtet werden können. Diese beschichteten und erfindungsgemäß bearbeiteten Formteile zeigen gute bis ausgezeichnete Oberflächenqualitäten.

Insbesondere für lackierte SMC- und BMC-Formteile ist das erfindungsgemäße Verfahren anwendbar. Im Rahmen der vorliegenden Erfindung soll unter SMC dabei ein verarbeitungsfähiges, flächiges Halbzeug aus vernetzungsfähigen meist ungesättigten Polyesterharzen, Glasfasern und notwendigen Zuschlagstoffen verstanden werden, welches in erwärmten Pressen zu Formteilen verarbeitet wird. Im Rahmen der vorliegenden Erfindung soll unter BMC eine spritzgieß- oder spritzpressfähige Formmasse mit geschnittenen Glasfasern verstanden werden. Dabei sind die Faserlängen von BMC kleiner als von SMC [Liebold, R.: mo 55 (2001) S. 41].

SMC- und BMC-Formteile sind Faser-Polymermatrix-Formteile, die aus einem reaktivem Prepreg (Harzmatte, SMC - sheet molding compound) über thermisches Pressen bei erhöhter Temperatur oder Bulkmaterial (BMC - bulk molding compound) über Spritzguss oder thermisches Pressen hergestellt werden und bis zur Formstabilität vernetzt werden. Die Bauteile werden nach bekannten Verfahren hergestellt, geformt und vernetzt.

Durch die Erfinder der vorliegenden Lösung konnte festgestellt werden, dass diese Formteile nach dem Stand der Technik innerhalb der industriellen Prozessschritte und -zeiten während des thermischen Pressens offensichtlich nicht in ausreichendem Maße und nicht reproduzierbar vernetzen und anschließend kein ausgehärtetes Formteil vorliegt. Die vollständige Aushärtung erfolgt dann meist erst bei einer weiteren Temperaturbehandlung, die im Zuge des Einbrennens der Lackschichten realisiert wird. Dabei kommt es zu den bekannten Ausgasungen und den nachteiligen Auswirkungen auf die Lackschicht.

Um diese nachteiligen Prozesse zu vermeiden, wurde erfindungsgemäß vorgeschlagen, eine Aushärtung und eine Oberflächenfunktionalisierung durchzuführen. Die Aushärtung findet dabei erfindungsgemäß in einem gewünschten Volumen des Formteiles statt. Dabei wird das gewünschte Volumen eines Formteiles im Wesentlichen vollständig ausgehärtet. Jedoch kann das gewünschte Volumen formteilbezogen auch nicht das gesamte Formteil betreffen, sondern beispielsweise kann nur eine Seite des Formteiles ausgehärtet werden oder nur ein Oberflächenbereich des Formteiles.

Erfindungsgemäß werden die Formteile für die Aushärtung mit energiereicher Strahlung oder energiereichen Teilchen beaufschlagt, die dann angeregte Atome oder Moleküle sowie Ionen erzeugen, die bevorzugt Radikale bilden und komplexe chemische Reaktionen im Formteil und/oder in dem gewünschten Volumen des Formteiles induzieren.

Durch die erfindungsgemäße Lösung wird in den Prozessablauf zwar ein zusätzlicher Prozessschritt eingeführt, der jedoch innerhalb kurzer Zeit (z. B. der Taktzeit des Herstellungsprozesses) die Formteile soweit aushärtet, dass im Wesentlichen keine Oberflächenfehler durch Ausgasungen und/oder Nachvernetzung bei den nachfolgenden Beschichtungsprozessen mehr auftreten.

Ein Vorteil der erfindungsgemäßen Lösung besteht darin, dass sowohl bei zu beschichtenden aber auch bei unbeschichteten Formteilen das Ausgasen von niedermolekularen Substanzen, wie beispielsweise Reaktivverdünnerresten, nahezu vollständig bis vollständig verhindert wird, so dass eben Oberflächenfehler und Fogging nicht mehr auftreten. Unter Fogging wird dabei die Emission von leicht flüchtigen Substanzen, wie beispielsweise Reaktivverdünnerresten, im Gebrauchszustand von unbeschichteten oder partiell beschichteten SMC-Pressteilen verstanden.

Dabei ist es erfindungsgemäß vorteilhaft, wenn die Bearbeitung in mehreren Schritten und/oder mit wechselndem Energieeintrag pro Schritt (z. B. Dosis, d. h. absorbierte Energie pro Masseneinheit) realisiert wird. Trotzdem können auch diese Bearbeitungszeiten in die üblichen Zykluszeiten des industriellen Herstellungsprozesses/der Produktionslinien eingepasst werden. Die Energieeinträge werden dabei in Abhängigkeit von der stofflichen Zusammensetzung des Formteiles, seinen Abmessungen und in Abhängigkeit von den Pressbedingungen gewählt.

Es ist auch möglich, die Aushärtung der Formteile nur in den Oberflächenbereichen der Formteile durchzuführen. Dies ist insbesondere von Vorteil, wenn große Formteildicken vorliegen. Dabei ist der gehärtete Bereich so dick zu realisieren, dass für die nachfolgenden Prozessschritte keine nachteiligen Auswirkungen auftreten. Insbesondere verhindert dieser ausgehärtete Oberflächenbereich, dass möglicherweise noch im Formteil befindliche Materialien, die entweder noch nicht ausgehärtet und/oder flüchtig sind, das Formteil verlassen können, aber trotzdem im Wesentlichen keine negativen Auswirkungen auf die zu lackierende Oberfläche des Formteiles haben.

Durch die erfindungsgemäße Lösung ist eine kosteneffiziente Lösung gefunden worden, bei der auf zusätzliche Nacharbeiten verzichtet werden kann, was durch die gesamtheitliche Betrachtung zur Ermittlung der Ursachen ermöglicht worden ist.

Der besondere Vorteil der vorliegenden Lösung besteht nicht nur in der Aushärtung der Formteile oder von Volumen- oder Oberflächenbereichen der Formteile sondern auch darin, dass mit dem Energieeintrag durch energiereiche Strahlung oder energiereiche Teilchen auch funktionelle Gruppen an der Oberfläche und/oder im oberflächennahen Bereich der Formteile erzeugt werden, die zu einer besseren Haftung der Beschichtung und einer Erhöhung der Hydrophilie der Oberfläche führen. Auf diese Weise wird letztlich auch eine Verbesserung der Oberflächenqualität der Formteiloberfläche und damit auch der lackierten/beschichteten Formteile erhalten.

Nachfolgend wird die Erfindung an mehreren Ausführungsbeispielen näher erläutert.

### Beispiel 1

### Ein Automobilformteil wird aus einem Prepreg einer Low profile-Rezeptur

### SMC-Paste:

| | |
|---|---|
| Ungesättigtes Polyesterharz (60 Gew.-% in Styrol) | 60 Gew.-Teile |
| Low-Profile Additiv (40 Gew. % in Styrol) | 40 Gew.-Teile |
| Calziumcarbonat | 10 Gew.-Teile |
| t-Butylperoxybenzoat | 1,5 Gew.-Teile |
| Zinkstearat | 4 Gew.-Teile |
| Magnesiumoxyd | 1 Gew.-Teil |

### SMC-Prepreg:

| | |
|---|---|
| SMC-Paste | 75 Gew.-% |
| Glasfasern (geschnitten, Länge: 1 inch) | 25 Gew.-% |

unter folgenden Bedingungen über thermisches Pressen hergestellt:
Temperatur/Matrize: 140 °C; Temperatur/Patrize: 139 °C, Schließzeit: 12 s, Presszeit: 180 s ; Pressdruck: 14 MPa.

Die über DSC ermittelte Restreaktivität im Formteil liegt bei - 8 J/g bezogen auf die Ausgangsreaktivität des Prepregs von - 40 J/g.

Anschließend wird das Formteil mittels Elektronen mit einer Dosis von 140 kGy unter Luftatmosphäre bei einer Produktgeschwindigkeit von 0,3 m/Minute bestrahlt. Die Bestrahlung erfolgt im Prozessablauf zwischen dem Ausstoß des Formteiles aus der Presse und den nachfolgenden Bearbeitungsschritten. Danach ist im Formteil mittels DSC keine Restreaktivität mehr feststellbar und das Formteil ist damit vollständig ausgehärtet. Der Kontaktwinkel mit Wasser als Testflüssigkeit sinkt von 98 ° auf 78 ° in Folge der Einlagerung sauerstoffhaltiger Gruppen in die Oberfläche.

### Beispiel 2

Ein Nutzfahrzeuganbauformteil wird aus einem Prepreg einer Low profile-Rezeptur unter folgenden Bedingungen über thermisches Pressen hergestellt:
Temperatur/Matrize: 140 °C; Temperatur/Patrize: 139 °C, Schließzeit: 12 s, Presszeit: 180 s ; Pressdruck: 14 MPa

Die über DSC ermittelte Restreaktivität im Formteil liegt bei - 7 J/g bezogen auf die Ausgangsreaktivität des Prepregs von - 37 J/g.

Anschließend wird das Formteil mittels Elektronen mit Einzeldosen von 7 x 20 kGy bei einer Produktgeschwindigkeit von 2,1 m/Minute unter Luftatmosphäre bestrahlt. Die Bestrahlung erfolgt im Prozessablauf zwischen dem Ausstoß des Formteiles aus der Presse und den nachfolgenden Bearbeitungsschritten. Danach ist im Formteil mittels DSC keine Restreaktivität mehr feststellbar und das Formteil ist vollständig ausgehärtet. Der Kontaktwinkel mit Wasser als Testflüssigkeit sinkt von 100 ° auf 32 ° in Folge der Einlagerung sauerstoffhaltiger Gruppen in die Oberfläche.

### Beispiel 3

Ein Automobilanbauformteil wird aus einem Prepreg einer Low shrink-Rezeptur (s. o.)

| | |
|---|---|
| Ungesättigtes Polyesterharz (70 Gew.-% in Styren) | 16,4 Gew.-% |
| Polystyren (40 Gew.-% in Styren) | 11 Gew.-% |
| Para-t-butylperoxybenzoat | 0,3 Gew.-% |
| Zinkstearat | 0,7 Gew.-% |
| Kalziumcarbonat | 41,1 Gew.-% |
| Magnesiumoxyd | 0,5 Gew.-% |
| Glasfaserroving (geschnitten, 1 inch Länge) | 30 Gew.-% |

unter folgenden Bedingungen über thermisches Pressen hergestellt:
Temperatur/ Matrize:140 °C; Temperatur/Patrize: 139 °C, Schließzeit: 12 s, Presszeit: 180 s ; Pressdruck: 14 MPa.

Die über DSC ermittelte Restreaktivität im Formteil liegt bei -2,2 J/g bezogen auf die Ausgangsreaktivität des Prepregs von -24 J/g.

Anschließend wird das Bauteil über Elektronenbestrahlung mit 70 kGy bei Produkttransportgeschwindigkeiten von 0,6 m/Minute und nachfolgend mit 7 x 10 kGy bei einer Produktgeschwindigkeit von 4,2 m/Minute unter Luftatmosphäre vollständig ausgehärtet. Danach ist im Bauteil mittels DSC keine Restreaktivität mehr feststellbar. Der Kontaktwinkel mit Wasser als Testflüssigkeit sinkt von 95 ° auf 72 ° in Folge der Einlagerung sauerstoffhaltiger Gruppen in die Oberfläche. Die Rauheiten befinden sich in einem vergleichbaren Bereich zum Zustand nach dem Pressprozess.

### Beispiel 4

Ein Automobilanbauformteil wird aus einem SMC-Prepreg einer Automotive Class A-Rezeptur unter folgenden Bedingungen über thermisches Pressen hergestellt:
Temperatur/Matrize: 150 °C; Temperatur/Patrize: 145 °C, Schließzeit: 10 s, Presszeit: 160 s ; Pressdruck: 12 MPa.

Die über DSC ermittelte Restreaktivität im Formteil liegt dickenabhängig bei durchschnittlich 17 % bezogen auf die Ausgangsreaktivität des Prepregs von -41 J/g. Dabei wurde bei einer Bauteildicke zwischen -2,2 - 3,2 mm eine Restreaktivität zwischen 14 und 20 %, bei ∼ 5,4 mm von 13 % und bei -10,3 mm von 10 % der Ausgangsreaktivität des Prepregs ermittelt.

Anschließend wird das Formteil mittels Elektronen mit Einzeldosen von 12 x 10 kGy bei einer Produktgeschwindigkeit von 4,2 m/Minute unter Luftatmosphäre bestrahlt. Die Bestrahlung erfolgt im Prozessablauf zwischen dem Ausstoß des Formteiles aus der Presse und dem nachfolgenden Bearbeitungsschritt. Danach ist im Formteil mittels DSC keine Restreaktivität mehr feststellbar und das Formteil ist vollständig ausgehärtet. Der Kontaktwinkel mit Wasser als Testflüssigkeit sinkt von 95 ° auf 72 ° in Folge der Einlagerung sauerstoffhaltiger Gruppen in die Oberfläche.

## Patentansprüche

1. Verfahren zur Aushärtung und Oberflächenfunktionalisierung von Formteilen bei dem Materialien, enthaltend mindestens ein ungesättigtes radikalisch oder kationisch härtendes Reaktivharzsystem und weitere Stoffe, zu einem Formteil verarbeitet und während oder nach dem Formgebungsprozess mit oder ohne Beschichtung bis zur Formstabilität vernetzt werden und während der Vernetzung und/oder nachfolgend, vor und/oder nach einer Beschichtung das Formteil einer Bearbeitung mittels energiereicher Strahlung oder energiereicher Teilchen bis zur im Wesentlichen vollständigen Aushärtung mindestens des Oberflächenbereiches des Formteiles, wobei die Aushärtung erfolgt, bis über DSC-Messungen keine Restaktivität im Formteil mehr detektierbar ist, und bis zur Herstellung einer im Wesentlichen vollständig beschichtbaren Formteiloberfläche ausgesetzt wird, wobei die Bearbeitung mittels energiereicher Strahlung oder energiereichen Teilchen in mindestens zwei Schritten mit gleicher oder unterschiedlicher Dosis pro Behandlungsschritt durchgeführt wird.

2. Verfahren nach Anspruch 1, bei dem Formteile hergestellt und einer Bearbeitung mit energiereicher Strahlung oder energiereichen Teilchen ausgesetzt werden, die aus einem Faser-Polymermatrix-Material, vorteilhafterweise aus ungesättigten Polyesterharzen oder Acrylharzen (Acrylaten, Methacrylaten) oder Epoxyharzen mit einem kationischen Initiator, bestehen.

3. Verfahren nach Anspruch 1, bei dem ein ungesättigtes Reaktivharzsystem eingesetzt wird, welches weitere Stoffe, vorteilhafterweise Additive oder Füllstoffe oder Verstärkungselemente oder weitere Polymere oder Reaktivverdünner, enthält.

4. Verfahren nach Anspruch 1, bei dem die Formteile eingesetzt werden, die sheet molding compound" (SMC) oder "bulk molding compound" (BMC) sind.

5. Verfahren nach Anspruch 1, bei dem die Formteile mittels Heißpressens geformt werden.

6. Verfahren nach Anspruch 1, bei dem die Vernetzung thermisch initiiert, vorteilhafterweise bis zur Formteilstabilität ausgeführt, wird.

7. Verfahren nach Anspruch 1, bei dem die Bearbeitung mittels energiereicher Strahlung oder energiereicher Teilchen in einer reaktiven Gasumgebung und/oder an Luft durchgeführt wird.

8. Verfahren nach Anspruch 1, bei dem die Bearbeitung mittels energiereicher Elektronen oder Gamma- oder Infrarot- oder Mikrowellenstrahlung oder Induktionseintrag in Kombination mit einer Plasmabehandlung durchgeführt wird.

9. Verfahren nach Anspruch 1, bei dem die Bearbeitung ausschließlich mit energiereichen Elektronen in einer reaktiven Gasumgebung und/oder an Luft durchgeführt wird.

10. Verfahren nach Anspruch 1, bei dem die Bearbeitung mit Dosen im Bereich von 10 kGy bis 250 kGy durchgeführt wird.

11. Verfahren nach Anspruch 1, bei dem die Bearbeitung bei Temperaturen von 5 °C bis zu Temperaturen bei denen die thermische Formteilstabilität der Materialien gewährleistet ist, durchgeführt wird.

12. Verfahren nach Anspruch 1, bei dem die Bearbeitung an beschichteten Faser-Polymermatrix-Formteilen durchgeführt wird.

13. Verfahren nach Anspruch 12, bei dem als Beschichtung eine Lackierung durchgeführt wird.

## Claims

1. Process for the full curing and surface functionalization of moulded articles where materials comprising at least one unsaturated reactive resin system which cures by a free-radical or cationic route and other substances are processed to give a moulded article and, during or after the shaping procedure, with or without coating, are crosslinked until dimensional stability is obtained, and during the crosslinking and/or thereafter, before and/or after a coating procedure, the moulded article is exposed to a treatment by high-energy radiation or high-energy particles until at least the surface region of the moulded article has in essence undergone complete full curing, where the full curing proceeds until DSC measurements can no longer detect any residual reactivity in the moulded article, and until a moulded-article surface that is in essence fully coatable has been produced, where the treatment by high-energy radiation or high-energy particles is carried out in at least two steps with identical or different dose per treatment step.

2. Process according to Claim 1, where moulded articles are produced and are exposed to a treatment with high-energy radiation or high-energy particles, where these consist of a fibre-polymer-matrix material, advantageously of unsaturated polyester resins or acrylic resins (acrylates, methacrylates) or epoxy resins with a cationic initiator.

3. Process according to Claim 1, where an unsaturated reactive resin system is used which comprises other substances, preferably additives or fillers or reinforcing elements or other polymers or reactive diluents.

4. Process according to Claim 1, where moulded articles are used which are sheet moulding compounds (SMC) or bulk moulding compounds (BMC).

5. Process according to Claim 1, where the moulded articles are moulded by hot press moulding.

6. Process according to Claim 1, where the crosslinking is initiated thermally, advantageously being implemented until the moulded article is stable.

7. Process according to Claim 1, where the treatment by high-energy radiation or high-energy particles is carried out in a reactive gas environment and/or in air.

8. Process according to Claim 1, where the treatment is carried out by use of high-energy electrons or gamma radiation or infrared radiation or microwave radiation or introduction of inductive effects in combination with a plasma treatment.

9. Process according to Claim 1, where the treatment is carried out exclusively with high-energy electrons in a reactive gas environment and/or in air.

10. Process according to Claim 1, where the treatment is carried out with doses in the range from 10 kGy to 250 kGy.

11. Process according to Claim 1, where the treatment is carried out at temperatures of from 5°C to temperatures at which the materials are certain to be thermally stable in the moulded article.

12. Process according to Claim 1, where the treatment is carried out on coated moulded fibre-polymer-matrix articles.

13. Process according to Claim 12, where the coating procedure carried out comprises a lacquering procedure.

## Revendications

1. Procédé de durcissement et de fonctionnalisation de surface de pièces moulées, selon lequel des matériaux contenant au moins un système de résine réactive insaturée durcissant par voie radicalaire ou cationique et d'autres substances sont transformés en une pièce moulée, et réticulés pendant ou après le processus de façonnage avec ou sans revêtement jusqu'à la stabilité de la forme, et la pièce moulée est exposée pendant la réticulation et/ou ultérieurement, avant et/ou après un revêtement, à un traitement au moyen d'un rayonnement riche en énergie ou de particules riches en énergie jusqu'au durcissement essentiellement complet d'au moins la zone de surface de la pièce moulée, le durcissement ayant lieu jusqu'à ce qu'aucune activité résiduelle ne soit plus détectable dans la pièce moulée par des mesures de DSC, et jusqu'à la formation d'une surface de pièce moulée pouvant être revêtue essentiellement dans sa totalité, le traitement au moyen d'un rayonnement riche en énergie ou de particules riches en énergie étant réalisé en au moins deux étapes avec une dose identique ou différente par étape de traitement.

2. Procédé selon la revendication 1, selon lequel des pièces moulées sont fabriquées et exposées à un traitement au moyen d'un rayonnement riche en énergie ou de particules riches en énergie, lesdites pièces moulées étant constituées par un matériau fibres-matrice polymère, de manière plus avantageuse de résines de polyester insaturées ou de résines acryliques (acrylates, méthacrylates) ou de résines époxy avec un initiateur cationique.

3. Procédé selon la revendication 1, selon lequel un système de résine réactive insaturée est utilisé, qui contient d'autres substances, de manière plus avantageuse des additifs ou des charges ou des éléments renforçants ou d'autres polymères ou des diluants réactifs.

4. Procédé selon la revendication 1, selon lequel des pièces moulées qui sont un SMC (Sheet Molding Compound) ou un BMC (Bulk Molding Compound) sont utilisées.

5. Procédé selon la revendication 1, selon lequel les pièces moulées sont façonnées par compression à chaud.

6. Procédé selon la revendication 1, selon lequel la réticulation est initiée thermiquement et avantageusement réalisée jusqu'à la stabilité de la pièce moulée.

7. Procédé selon la revendication 1, selon lequel le traitement au moyen d'un rayonnement riche en énergie ou de particules riches en énergie est réalisé dans un environnement gazeux réactif et/ou dans l'air.

8. Procédé selon la revendication 1, selon lequel le traitement est réalisé au moyen d'électrons riches en énergie ou d'un rayonnement gamma ou infrarouge ou micro-ondes, ou par apport d'induction en combinaison avec un traitement plasma.

9. Procédé selon la revendication 1, selon lequel le traitement est réalisé exclusivement avec des électrons riches en énergie dans un environnement gazeux réactif et/ou dans l'air.

10. Procédé selon la revendication 1, selon lequel le traitement est réalisé avec des doses dans la plage allant de 10 kGy à 250 kGy.

11. Procédé selon la revendication 1, selon lequel le traitement est réalisé à des températures de 5 °C jusqu'à des températures auxquelles la stabilité thermique des matériaux de la pièce moulée est assurée.

12. Procédé selon la revendication 1, selon lequel le traitement est réalisé sur des pièces moulées de fibres-matrice polymère revêtues.

13. Procédé selon la revendication 12, selon lequel un vernissage est réalisé en tant que revêtement.
